# EUROPÄISCHE PATENTANMELDUNG

(11) **EP 1 574 358 A1**
(43) Veröffentlichungstag der Anmeldung: **14.09.2005**
(21) Anmeldenummer: 05005005.3
(22) Anmeldetag: 08.03.2005
(51) Int. Cl.: B42D 15/10, G06K 19/077

(54) **Ausweisdokument mit einem integrierten Schaltkreis**

(30) Priorität: 09.03.2004 DE 102004011489
(71) Anmelder: Giesecke & Devrient GmbH, 81677 München (DE)
(72) Erfinder: Bauer, Michael, 82216 Gernlinden (DE)

(57) **Zusammenfassung**

Die Erfindung betrifft ein Ausweisdokument (1) mit mehreren Dokumentseiten (2, 3, 4), die im Bereich eines Dokumentrückens (5) miteinander verbunden sind, wobei eine der Dokumentseiten (2, 3, 4) einen integrierten Schaltkreis (6) aufweist. Das erfindungsgemäße Ausweisdokument (1) zeichnet sich dadurch aus, dass die Dokumentseite (2, 3, 4), die den integrierten Schaltkreis (6) aufweist, im Bereich des integrierten Schaltkreises (6) durch ein mechanisch widerstandsfähiges Schutzelement (8) verstärkt ist, das wenigstens eine Hauptfläche des integrierten Schaltkreises (6) abdeckt und sich lediglich über einen Teilbereich der Dokumentseite (2, 3, 4) erstreckt.

## Beschreibung

Die Erfindung betrifft ein Ausweisdokument mit einem integrierten Schaltkreis. Weiterhin betrifft die Erfindung ein Schutzelement für ein Ausweisdokument mit einem integrierten Schaltkreis und ein Verfahren zur Herstellung eines Ausweisdokuments mit einem integrierten Schaltkreis.

Es ist bereits bekannt, Ausweisdokumente mit einem integrierten Schaltkreis auszustatten, um auf diese Weise einen möglichst hohen Sicherheitsstandard zu gewährleisten. Insbesondere können Ausweisdokumente einen Transponder aufweisen, der aus dem integrierten Schaltkreis und einer daran angeschlossenen Antenne besteht und eine kontaktlose Datenübertragung ermöglicht. Ein derartiges Ausweisdokument ist beispielsweise aus der US 2003/0168514 A1 bekannt. Dort ist ein Passbuch offenbart, bei dem der Transponder in eine Umschlagsseite eingebettet ist. Der integrierte Schaltkreis des Transponders ist dabei vorzugsweise in der Nähe des Rückens des Ausweisbuches angeordnet. Die Umschlagsseite ist mehrlagig aufgebaut und weist eine Trägerschicht auf, auf welcher der integrierte Schaltkreis und die Antenne aufgebracht sind. Darauf folgt eine zweite Schicht, die so dick ist, dass sie den integrierten Schaltkreis vollständig aufnimmt und dadurch zusammen mit der Trägerschicht und weiteren Schichten vor äußeren mechanischen Einwirkungen schützt.

Auf die in der US 2003/0168514 A1 beschriebene Weise lässt sich allenfalls ein integrierter Schaltkreis mit kleinen geometrischen Abmessungen wirksam schützen. Wenn zunehmend größere integrierte Schaltkreise eingesetzt werden sollen, reichen die dort beschriebenen Maßnahmen nicht aus, die Unversehrtheit des integrierten Schaltkreises über die gesamte Gültigkeitsdauer des Ausweisdokuments zu gewährleisten. Besonders starke Belastungen treten beispielsweise beim Einstempeln von Einträgen in das Ausweisdokument auf.

Der Erfindung liegt die Aufgabe zugrunde, einen in ein Ausweisdokument eingebrachten integrierten Schaltkreis zuverlässig vor mechanischen Einwirkungen zu schützen.

Diese Aufgabe wird durch ein Ausweisdokument mit der Merkmalskombination des Anspruchs 1 gelöst.

Das erfindungsgemäße Ausweisdokument verfügt über mehrere Dokumentseiten, die im Bereich eines Dokumentrückens miteinander verbunden sind, wobei eine der Dokumentseiten einen integrierten Schaltkreis aufweist. Die Besonderheit des erfindungsgemäßen Ausweisdokuments besteht darin, dass die Dokumentseite, die den integrierten Schaltkreis aufweist, im Bereich des integrierten Schaltkreises durch ein mechanisch widerstandsfähiges Schutzelement verstärkt ist, das wenigstens eine Hauptfläche des integrierten Schaltkreises abdeckt und sich lediglich über einen Teilbereich der Dokumentseite erstreckt.

Die Erfindung hat den Vorteil, dass der integrierte Schaltkreis zuverlässig vor äußeren mechanischen Einwirkungen, insbesondere auch vor Belastungen beim Besternpeln des Ausweisdokuments geschützt wird. Ein weiterer Vorteil der Erfindung besteht darin, dass ein unberechtigtes Entnehmen des integrierten Schaltkreises aus dem Ausweisdokument erschwert wird.

In einem bevorzugten Ausführungsbeispiel weist das Schutzelement eine Abdeckung mit wenigstens einem Verankerungselement auf, mit dessen Hilfe das Schutzelement an der Dokumentseite fixiert ist. Eine derartige Ausbildung des Schutzelements ermöglicht eine einfache Montage und einen zuverlässigen Halt des Schutzelements. In dieser Hinsicht ist es besonders vorteilhaft, wenn das Schutzelement wenigstens ein Gegenstück aufweist, mit dem die Abdeckung durch das Verankerungselement verbunden ist. Insbesondere kann das Verankerungselement formschlüssig in das Gegenstück eingreifen, so dass die Verbindung zwischen der Abdeckung und dem Gegenstück auch hohen Belastungen standhält. Eine konkrete Realisierung der Verbindung zwischen der Abdeckung und dem Gegenstück kann beispielsweise so erfolgen, dass das Verankerungselement in eine Ausnehmung oder einen Hinterschnitt des Gegenstücks eingreift. Wenn die Abdekkung und das Gegenstück auf unterschiedlichen Seiten der Dokumentseite angeordnet sind, kann durch die Verbindung zwischen der Abdeckung und dem Gegenstück eine besonders zuverlässige Fixierung des Schutzelements an der Dokumentseite erreicht werden.

Die Abdeckung und/oder das Gegenstück sind vorzugsweise in einer Vertiefung der Dokumentseite angeordnet, damit sie nicht oder nur wenig über die Oberfläche der Dokumentseite überstehen. Dadurch wird einerseits die Gefahr eines Ablösens des Schutzelements von der Dokumentseite weiter verringert und andererseits wirkt das Schutzelement nicht als störender Fremdkörper. Weiterhin können die Abdeckung und/oder das Gegenstück eine Hauptfläche des integrierten Schaltkreises abdecken. Das Schutzelement kann somit abgestimmt auf die jeweiligen Gegebenheiten so ausgebildet werden, dass es den integrierten Schaltkreis wahlweise vor mechanischen Einwirkungen auf die Vorder- und/oder die Rückseite der Dokumentseite schützt.

Das Ausweisdokument ist bevorzugt so ausgebildet, dass sich das Verankerungselement durch die Dokumentseite hindurch erstreckt und dadurch mit dem Verankerungselement eine innige Anbindung des Schutzelements an die Dokumentseite hergestellt wird. Insbesondere kann die Dokumentseite im Bereich des Verankerungselements ein Durchgangsloch aufweisen.

Das Verankerungselement kann so ausgebildet sein, dass es ein Raster aufweist. Mit Hilfe des Rasters kann das Verankerungselement durch einfaches Einrasten mit dem Gegenstück verbunden werden.

Das Gegenstück kann als ein integraler Bestandteil der Dokumentseite oder als ein separates Bauteil ausgebildet sein. Dadurch besteht ein gewisser Freiraum zur Optimierung des Fertigungsprozesses.

Um die Schutzwirkung für den integrierten Schaltkreis noch weiter zu verbessern, kann das Schutzelement näher am Dokumentrücken als am freien Ende der Dokumentseite, vorzugsweise unmittelbar benachbart zum Dokumentrücken, angeordnet sein. Der integrierte Schaltkreis ist vorzugsweise in einer Dokumentseite enthalten, die als eine Umschlagsseite ausgebildet ist. Umschlagseiten sind in der Regel deutlich dicker ausgebildet als sonstige Dokumentseiten eines Ausweisdokuments und bieten daher mehr Platz für den integrierten Schaltkreis und auch für das Schutzelement.

Das Schutzelement kann insbesondere aus Kunststoff und/oder Metall gefertigt sein. Das Ausweisdokument kann wenigstens teilweise aus Papier gefertigt sein.

Die Erfindung bezieht sich weiterhin auf ein Schutzelement für ein Ausweisdokument mit einem integrierten Schaltkreis. Das erfindungsgemäße Schutzelement zeichnet sich dadurch aus, dass eine Abdeckung mit wenigstens einem Verankerungselement zur Fixierung am Ausweisdokument vorgesehen ist. Vorzugsweise ist zudem wenigstens ein Gegenstück vorgesehen, das über das Verankerungselement mit der Abdeckung verbindbar ist.

Schließlich bezieht sich die Erfindung noch auf ein Verfahren zum Herstellen eines Ausweisdokuments mit mehreren Dokumentseiten, die im Bereich eines Dokumentrückens miteinander verbunden sind, wobei eine der Dokumentseiten einen integrierten Schaltkreis aufweist. Das erfindungsgemäße Verfahren zeichnet sich dadurch aus, dass die Dokumentseite, die den integrierten Schaltkreis aufweist, im Bereich des integrierten Schaltkreises durch ein mechanisch widerstandsfähiges Schutzelement verstärkt wird, das wenigstens eine Hauptfläche des integrierten Schaltkreises abdeckt und sich lediglich über einen Teilbereich der Dokumentseite erstreckt.

Beim erfindungsgemäßen Verfahren kann insbesondere so vorgegangen werden, dass durch die Montage des Schutzelements eine elektrische Verbindung zwischen dem integrierten Schaltkreis und einer Übertragungseinrichtung hergestellt wird, durch die eine Kommunikation mit einem externen Gerät ermöglicht wird. Dies hat den Vorteil, dass bis zur Montage des Schutzelements ein Zugriff auf den integrierten Schaltkreis nicht möglich ist und dadurch ein Schutz vor Manipulationen besteht.

Für die Fixierung des Schutzelements an der Dokumentseite stehen im Rahmen des erfindungsgemäßen Verfahrens unterschiedliche Techniken, wie beispielsweise Kleben, Nieten, Einrasten und Prägen zur Verfügung, die jeweils einzeln oder in Kombination angewendet werden können und lediglich einen geringen Fertigungsaufwand erfordern.

Die Erfindung wird nachstehend anhand der in der Zeichnung dargestellten Ausführungsbeispiele erläutert.

### Es zeigen:

- Fig. 1: ein Ausführungsbeispiel für ein erfindungsgemäß ausgebildetes Ausweisdokument in perspektivischer Darstellung,
- Fig. 2: ein erstes Ausführungsbeispiel des Schutzelements in Schnittdarstellung,
- Fig. 3: die Abdeckung des in Fig. 2 dargestellten Schutzelements in Aufsicht,
- Fig. 4: das Gegenstück des in Fig. 2 dargestellten Schutzelements in Aufsicht,
- Fig. 5: ein zweites Ausführungsbeispiel des Schutzelements in Schnittdarstellung,
- Fig. 6: die Abdeckung des in Fig. 5 dargestellten Schutzelements in Aufsicht,
- Fig. 7: das Gegenstück des in Fig. 5 dargestellten Schutzelements in Aufsicht,
- Fig. 8: ein Ausweisdokument mit einem dritten Ausführungsbeispiel des Schutzelements in perspektivischer Darstellung,
- Fig. 9: das dritte Ausführungsbeispiel des Schutzelements in Schnittdarstellung,
- Fig. 10: die Abdeckung des in Fig. 9 dargestellten Schutzelements in Aufsicht,
- Fig. 11: eines der Gegenstücke des in Fig. 9 dargestellten Schutzelements in Aufsicht und
- Fig. 12: ein viertes Ausführungsbeispiel des Schutzelements im montierten Zustand in Schnittdarstellung.

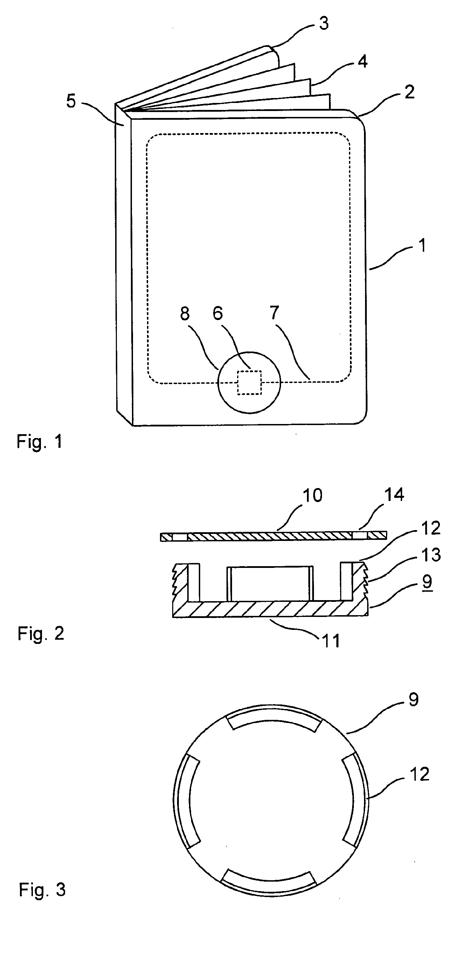

Fig. 1 zeigt ein Ausführungsbeispiel für ein erfindungsgemäß ausgebildetes Ausweisdokument 1 in perspektivischer Darstellung. Beim dargestellten Ausführungsbeispiel weist das Ausweisdokument 1 eine vordere Umschlagsseite 2, eine hintere Umschlagsseite 3 und mehrere innere Dokumentseiten 4 auf. Die Umschlagsseiten 2 und 3 sowie die inneren Dokumentseiten 4 sind im Bereich eines Dokumentrückens 5 miteinander verbunden, so dass das Ausweisdokument 1 aufgeblättert werden kann. Sowohl die Umschlagsseiten 2 und 3 als auch die inneren Dokumentseiten 4 können aus Papier und/oder aus Kunststofffolien hergestellt werden. Die vordere Umschlagsseite 2 und/oder die hintere Umschlagsseite 3 sind dicker und stabiler als die inneren Dokumentseiten 4 ausgebildet, um dem Ausweisdokument 1 eine gewisse Formstabilität zu verleihen. In die vordere Umschlagsseite 2 ist ein integrierter Schaltkreis 6 eingearbeitet, an den eine Antenne 7 angeschlossen ist, so dass eine kontaktlose Datenübertragung zwischen dem integrierten Schaltkreis 6 und einem nicht figürlich dargestellten externen Gerät möglich ist. Der integrierte Schaltkreis 6 und die Antenne 7 sind innerhalb der beispielsweise mehrlagig ausgebildeten vorderen Umschlagsseite 2 angeordnet und somit von außen nicht sichtbar. Insbesondere können der integrierte Schaltkreis 6 und die Antenne 7 auf einem Inlay angeordnet sein, das Bestandteil der vorderen Umschlagsseite 2 ist.

Abweichend vom dargestellten Ausführungsbeispiel können der integrierte Schaltkreis 6 und die Antenne 7 auch auf der hinteren Umschlagsseite 3 oder auf einer der inneren Dokumentseiten 4 angeordnet sein. Außerdem besteht die Möglichkeit, auf die Antenne 7 zu verzichten und den integrierten Schaltkreis 6 mit von außen zugänglichen Kontaktflächen zu verbinden.

Von besonderer Bedeutung für die Erfindung ist ein Schutzelement 8, das im Bereich des integrierten Schaltkreises 6 auf der vorderen Umschlagsseite 2 angeordnet ist. Das Schutzelement 8 deckt den integrierten Schaltkreis 6 ab, um ihn vor der Einwirkung mechanischer Belastungen zu schützen. Um einen ausreichenden Schutz zu gewährleisten, besteht das Schutzelement 8 aus einem stabilen Material, insbesondere aus Kunststoff, der mit Glasfasern verstärkt sein kann, und/oder aus Metall. Das Schutzelement 8 kann beispielsweise durch Kleben, Nieten, Prägen oder Einrasten an der vorderen Umschlagsseite 2 fixiert werden. Dabei ist es insbesondere auch möglich, diese Verfahren in Kombination anzuwenden. Der Aufbau und die Art der Fixierung des Schutzelements 8 werden im Folgenden noch näher erläutert.

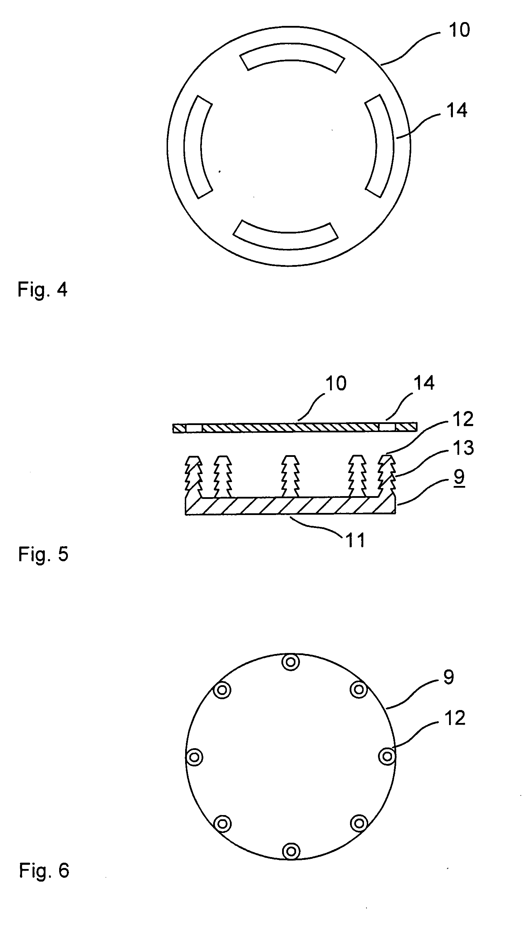

Fig. 2 zeigt ein erstes Ausführungsbeispiel des Schutzelements 8 in Schnittdarstellung. Das Schutzelement 8 weist eine Abdeckung 9 und ein Gegenstück 10 auf, die insbesondere aus Metall und/oder Kunststoff bestehen können, wobei für die Abdeckung 9 und das Gegenstück 10 sowohl gleiche als auch unterschiedliche Materialien verwendet werden können. Eine Aufsicht auf die Abdeckung 9 ist in Fig. 3 dargestellt. Eine Aufsicht auf das Gegenstück 10 zeigt Fig. 4. Die Schnittdarstellung der Fig. 2 ist so gewählt, dass der Schnitt jeweils mittig in horizontaler Richtung durch die Fig. 3 und 4 verläuft.

Beim ersten Ausführungsbeispiel des Schutzelements 8 weist die Abdekkung 9 eine scheibenförmige Deckplatte 11 und mehrere Verankerungselemente 12 auf. Die Deckplatte 11 ist größer als die Hauptflächen des integrierten Schaltkreises 6 und kann den integrierten Schaltkreis 6 somit vollständig abdecken. Die Verankerungselemente 12 erstrecken sich ausgehend von der Deckplatte 11 in axialer Richtung und sind jeweils als Segmente einer Mantelfläche eines Zylinders ausgebildet. Auf den äußeren Radialflächen der Verankerungselemente 12 ist jeweils ein Raster 13 in Form einer Sägezahn-Struktur ausgebildet. Das Gegenstück 10 ist ebenfalls scheibenförmig ausgebildet und weist mehrere umfangsparallel verlaufende Ausnehmungen 14 auf. Die Ausnehmungen 14 sind in Form und Anzahl auf die Verankerungselemente 12 der Abdeckung 9 abgestimmt, so dass die Verankerungselemente 12 in die Ausnehmungen 14 eingeführt und dadurch die Abdeckung 9 und das Gegenstück 10 mechanisch miteinander verbunden werden können. Durch das auf den Verankerungselementen 12 ausgebildete Raster 13 wird erreicht, dass sich die Verankerungselemente 12 leicht in die Ausnehmungen 14 einführen lassen und durch ein formschlüssiges Einrasten sicher verankert werden. Die Verankerungselemente 12 können dabei insbesondere so ausgeführt sein, dass nach dem Einführen in die Ausnehmungen 14 eine zerstörungsfreie Trennung der Abdeckung 9 vom Gegenstück 10 nicht mehr möglich ist. Dadurch können Manipulationsversuche an dem vom Schutzelement 8 abgedeckten integrierten Schaltkreis 6 des Ausweisdokuments 1 sichtbar gemacht werden.

Vor der Montage des Schutzelements 8 kann das Ausweisdokument 1 weitgehend fertig gestellt und insbesondere bereits personalisiert werden. Zum Anbringen des Schutzelements 8 am Ausweisdokument 1 werden um den integrierten Schaltkreis 6 herum Löcher zum Durchführen der Verankerungselemente 12 der Abdeckung 9 in die vordere Umschlagsseite 2 gestanzt. Das von der Anordnung der Verankerungselemente 12 der Abdekkung 9 abhängige Stanzmuster wird dabei so orientiert, dass die Antenne 7 nicht beschädigt wird. Dann werden die Verankerungselemente 12 von einer Seite der vorderen Umschlagsseite 2 aus durch die Löcher hindurchgeführt und in die Ausnehmungen 14 des auf der anderen Seite angeordneten Gegenstücks 10 eingerastet. Dadurch werden die Abdeckung 9 und das Gegenstück 10 an der vorderen Umschlagsseite 2 des Ausweisdokuments 1 fixiert. Der integrierte Schaltkreis 6 ist dann zwischen der Abdeckung 9 und dem Gegenstück 10 angeordnet und wird auf einer Hauptfläche der vorderen Umschlagsseite 2 von der Abdeckung 9 und auf der anderen Hauptfläche vom Gegenstück 10 abgedeckt und dadurch vor mechanischen Einwirkungen geschützt.

Die Montage des Schutzelements 8 kann auf vielfältige Weise abgewandelt werden. Beispielsweise können die Löcher für die Verankerungselemente 12 auch bereits im Rahmen der Herstellung der vorderen Umschlagsseite 2 ausgebildet werden. Außerdem ist es wahlweise möglich, das Schutzelement 8 so anzubringen, dass die Abdeckung 9 und/oder das Gegenstück 10 über die jeweilige Hauptfläche der vorderen Umschlagsseite 2 überstehen oder bündig mit dieser abschließen bzw. geringfügig zurückversetzt sind. In den beiden letztgenannten Fällen ist jeweils eine Vertiefung in der vorderen Umschlagsseite 2 auszubilden, die die Abdeckung 9 bzw. das Gegenstück 10 aufnimmt. Dabei kann das Gegenstück 10 jeweils entweder als separate Komponente oder als integraler Bestandteil der vorderen Umschlagsseite 2 ausgebildet sein. Weitere Variationsmöglichkeiten bestehen auch bzgl. des Ortes der Montage. So kann das Schutzelement 8 auch auf der hinteren Umschlagsseite 3 oder einer der inneren Dokumentseiten 4 angebracht werden, falls der integrierte Schaltkreis 6 dort angeordnet ist.

Im Folgenden werden weitere Ausführungsbeispiele des Schutzelements 8 bzw. des Ausweisdokuments 1 beschrieben. Für diese weiteren Ausführungsbeispiele gelten die vorstehenden Erläuterungen ebenfalls sinngemäß.

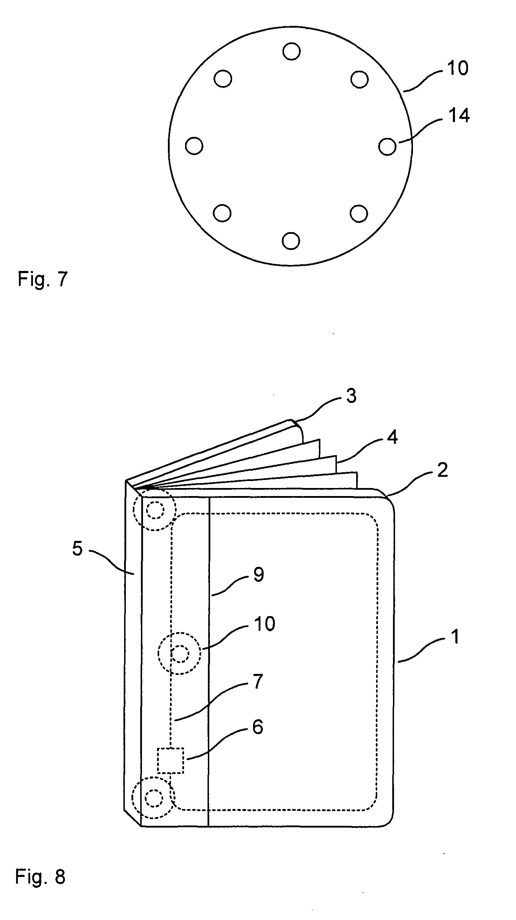

Fig. 5 zeigt ein zweites Ausführungsbeispiel des Schutzelements 8 in Schnittdarstellung. Zugehörige Aufsichten auf die Abdeckung 9 bzw. das Gegenstück 10 sind in den Fig. 6 und 7 dargestellt. Die Schnittebene der Fig. 5 verläuft mittig in horizontaler Richtung durch die Fig. 6 und 7.

Beim zweiten Ausführungsbeispiel des Schutzelements 8 sind die Abdekkung 9 und das Gegenstück 10 wiederum scheibenförmig ausgebildet. Allerdings sind die Verankerungselemente 12 der Abdeckung 9 im Unterschied zum ersten Ausführungsbeispiel als über den Umfang der Deckplatte 11 verteilte Zapfen mit einem kreisförmigen Querschnitt ausgebildet, bei denen sich das Raster 13 jeweils über die gesamte Mantelfläche des jeweiligen Verankerungselements 12 erstreckt. Dementsprechend weist das Gegenstück 10 kreisförmige Ausnehmungen 14 auf, die korrelierend zu den Verankerungselementen 12 der Abdeckung 9 angeordnet sind. Um das Schutzelement 8 am Ausweisdokument 1 anbringen zu können, ist die vordere Umschlagsseite 2 des Ausweisdokuments 1 mit einem entsprechenden Lochmuster zu versehen.

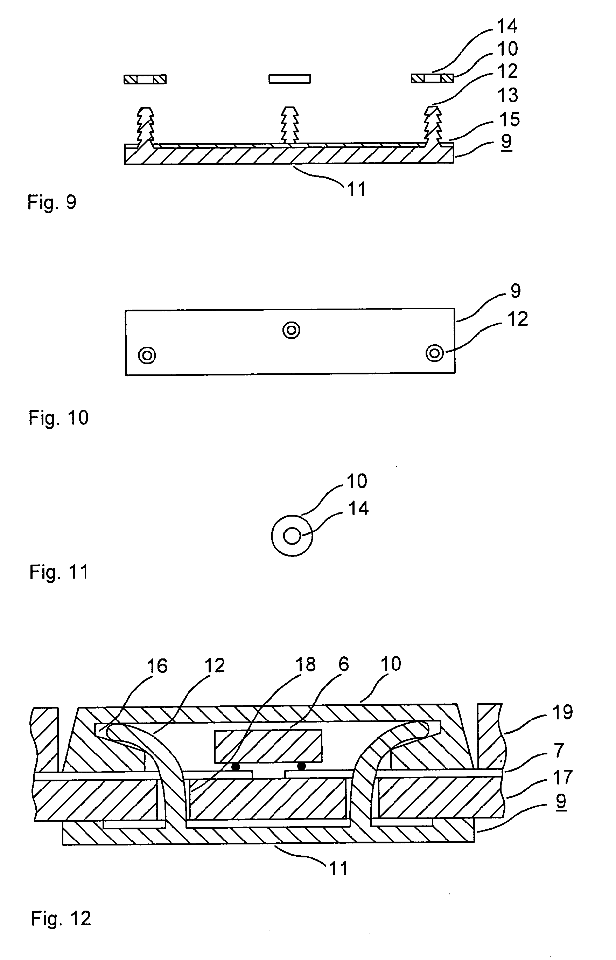

Fig. 8 zeigt ein Ausweisdokument 1 mit einem dritten Ausführungsbeispiel des Schutzelements 8 in perspektivischer Darstellung. Fig. 9 zeigt das dritte Ausführungsbeispiel des Schutzelements 8 in Schnittdarstellung. Die zugehörigen Aufsichten auf die Abdeckung 9 und auf eines von mehreren Gegenstücken 10 sind in den Fig. 10 und 11 dargestellt. Die Schnittebene der Fig. 9 verläuft in horizontaler Richtung durch Fig. 10, wobei die unteren beiden Verankerungselemente 12 jeweils mittig geschnitten werden.

Das dritte Ausführungsbeispiel des Schutzelements 8 zeichnet sich dadurch aus, dass die Abdeckung 9 als ein länglicher Steg geformt ist und mehrere als Zapfen entsprechend dem zweiten Ausführungsbeispiel ausgebildete Verankerungselemente 12 aufweist. Dabei weisen die Verankerungselemente 12 wiederum jeweils das Raster 13 auf. Zusätzlich zu den Verankerungselementen 12 weist die Abdeckung 9 eine Klebstoffschicht 15, beispielsweise in Form eines doppelseitigen Klebebands auf, um die Abdekkung 9 zuverlässig am Ausweisdokument 1 zu fixieren. Die Verankerungselemente 12 sind nicht in einer Flucht sondern seitlich versetzt zueinander angeordnet, so dass die Antenne 7 im Bereich des Versatzes zwischen den Verankerungselementen 12 geführt werden kann. Für jedes Verankerungselement 12 der Abdeckung 9 ist ein eigenes Gegenstück 10 vorgesehen, das als eine Scheibe mit einer zentralen Ausnehmung 14 ausgeführt ist.

Wie aus Fig. 8 hervorgeht, ist die Abdeckung 9 in der Nähe des Dokumentrückens 5 auf der vorderen Umschlagsseite 2 des Ausweisdokuments 1 angeordnet, wobei die Längsseite der Abdeckung 9 parallel zum Dokumentrücken 5 verläuft und sich über die gesamte Länge der vorderen Umschlagsseite 2 erstreckt. Alternativ dazu kann die Abdeckung 9 auch kürzer ausgebildet sein und sich nur über einen Teilbereich der vorderen Umschlagsseite 2 erstrecken. Die Position der Abdeckung 9 wird durch den integrierten Schaltkreis 6 vorgegeben, der deshalb nahe am Dokumentrücken 5 angeordnet ist, um die einwirkenden mechanischen Belastungen möglichst gering zu halten. Insbesondere die Belastung durch Stempelvorgänge ist vergleichsweise gering, da nahe am Dokumentrücken 5 nur sehr selten gestempelt wird.

Fig. 12 zeigt ein viertes Ausführungsbeispiel des Schutzelements 8 im montierten Zustand in Schnittdarstellung. Die Besonderheit dieses Ausführungsbeispiels besteht darin, dass das Schutzelement 8 durch eine Nietoperation am Ausweisdokument 1 fixiert wird. Hierzu sind die Verankerungselemente 12 der Abdeckung 9 so ausgebildet, dass sie im Rahmen der Nietoperation umgebogen werden können. Die Verankerungselemente 12 können dabei in Analogie zum ersten Ausführungsbeispiel des Schutzelements 8 als Segmente oder in Analogie zum zweiten und dritten Ausführungsbeispiel als Zapfen geformt sein. Ein auf den Verankerungselementen 12 ausgebildetes Raster 13 ist nicht erforderlich. Um den Nietvorgang zu erleichtern, weicht die Orientierung der Verankerungselemente 12 bereits vor der Montage geringfügig radial auswärts von der Axialrichtung ab. Das Gegenstück 10 weist die Form einer Kappe auf und ist mit Hinterschnitten 16 zur Aufnahme der Verankerungselemente 12 ausgestattet.

Im montierten Zustand greifen die Verankerungselemente 12 der Abdekkung 9 in die Hinterschnitte 16 des Gegenstücks 10 ein, so dass die Abdekkung 9 formschlüssig mit dem Gegenstück 10 verbunden ist. Dabei durchdringen die Verankerungselemente 12 der Abdeckung 9 eine erste Lage 17 der mehrlagig ausgebildeten vorderen Umschlagsseite 2 des Ausweisdokuments 1 im Bereich von dafür vorgesehenen Durchgangslöchern 18. Die vordere Umschlagsseite 2 des Ausweisdokuments 1 weist weiterhin eine zweite Lage 19 auf, wobei zwischen der ersten Lage 17 und der zweiten Lage 19 die Antenne 7 angeordnet ist und dadurch vor Beschädigung geschützt ist. Die Durchgangslöcher 18 sind seitlich versetzt zur Antenne 7 angeordnet, um eine Beschädigung der Antenne 7 zu vermeiden. Zusätzlich zu den beiden Lagen 17 und 19 können weitere Lagen vorhanden sein, die nicht figürlich dargestellt sind. Im Bereich des Gegenstücks 10 des Schutzelements 8 ist die zweite Lage 19 ausgespart, so dass das Gegenstück 10 bündig mit der Oberfläche der vorderen Umschlagsseite 2 des Ausweisdokuments 1 abschließt. Innerhalb des Gegenstücks 10 ist der integrierte Schaltkreis 6 direkt auf die Antenne 7 aufgesetzt und dadurch elektrisch mit der Antenne 7 verbunden.

Die Montage des vierten Ausführungsbeispiels des Schutzelements 8 kann beispielsweise so erfolgen, dass die Verankerungselemente 12 der Abdekkung 9 durch die Durchgangslöcher 18 der ersten Lage 17 gefädelt werden, bis die Abdeckung 9 an der ersten Lage 17 anliegt. In dieser Position wird die Abdeckung 9 unterstützt. Dann wird das Gegenstück 10 der Abdeckung 9 von der anderen Seite der ersten Lage 17 her genähert, bist die Verankerungselemente 12 der Abdeckung 9 das Gegenstück 10 berühren. Mit weiter zunehmender Annäherung werden die Verankerungselemente 12 vom Gegenstück 10 immer stärker umgebogen und greifen zunehmend in die Hinterschnitte 16 des Gegenstücks 10 ein. Wenn das Gegenstück 10 an der Antenne 7 anliegt, ist die Annäherung des Gegenstücks 10 beendet und die Verankerungselemente 12 greifen weit in die Hinterschnitte 16 des Gegenstücks 10 ein. Damit die Antenne 7 durch das Gegenstück 10 nicht kurzgeschlossen wird, sind bei einer Ausführung des Gegenstücks 10 aus Metall geeignete Maßnahmen zu treffen. Beispielsweise kann das Gegenstück 10 im Bereich der Antenne 7 Nuten aufweisen, um eine Berührung der Antenne 7 zu vermeiden.

Neben den vorstehend beschriebenen Befestigungsmethoden Einrasten, Kleben und Nieten kann das Schutzelement 8 auch auf andere Weise am Ausweisdokument 1 fixiert werden, beispielsweise durch Prägen, und es können auch mehrere Befestigungsmethoden in Kombination angewendet werden. Dabei erfolgt die Montage des Schutzelements 8 am Ausweisdokument 1 jeweils vorzugsweise nach der Personalisierung des Ausweisdokuments 1.

Sämtliche Ausführungsbeispiele des Schutzelements 8 können so abgewandelt werden, dass erst mit der Montage des Schutzelements 8 am Ausweisdokument 1 eine elektrische Verbindung zwischen dem integrierten Schaltkreis 6 und der Antenne 7 ausgebildet wird und der integrierte Schaltkreis 6 dadurch bis zur Montage des Schutzelements 8 vor Zugriffen gesichert ist. Dies kann beispielsweise dadurch realisiert werden, dass das Schutzelement 8 eine oder mehrere Kontaktbrücken aufweist, die sich zwischen stempelartigen Fortsätzen erstrecken. Bei der Montage des Schutzelements 8 werden die stempelartigen Fortsätze gegen die Antenne 7 bzw. gegen Bereiche gepresst, die elektrisch mit dem integrierten Schaltkreis 6 verbunden sind. Ebenso können mit dem Schutzelement 8 Durchkontaktierungen vorgenommen werden. Prinzipiell ist es auch möglich ein mehrmals betätigbares Schaltelement in das Schutzelement 8 zu integrieren, beispielsweise in Form eines Drehschalters, der durch eine mehrteilige Komponente des Schutzelements 8 ausgebildet wird.

Weiterhin können die Ausführungsbeispiele des Schutzelements 8 so abgewandelt werden, dass die Abdeckung 9 oder das Gegenstück 10 ein Bestandteil eines Chipmoduls ist, das den integrierten Schaltkreis 6 enthält. Ebenso ist es auch möglich, dass die Abdeckung 9 oder das Gegenstück 10 in das Ausweisdokument 1 eingearbeitet ist.

## Patentansprüche

1. Ausweisdokument mit mehreren Dokumentseiten (2, 3, 4), die im Bereich eines Dokumentrückens (5) miteinander verbunden sind, wobei eine der Dokumentseiten (2, 3, 4) einen integrierten Schaltkreis (6) aufweist, **dadurch gekennzeichnet, dass** die Dokumentseite (2, 3, 4), die den integrierten Schaltkreis (6) aufweist, im Bereich des integrierten Schaltkreises (6) durch ein mechanisch widerstandsfähiges Schutzelement (8) verstärkt ist, das wenigstens eine Hauptfläche des integrierten Schaltkreises (6) abdeckt und sich lediglich über einen Teilbereich der Dokumentseite (2, 3, 4) erstreckt.

2. Ausweisdokument nach Anspruch 1, **dadurch gekennzeichnet, dass** das Schutzelement (8) eine Abdeckung (9) mit wenigstens einem Verankerungselement (12) aufweist, mit dessen Hilfe das Schutzelement (8) an der Dokumentseite (2, 3, 4) fixiert ist.

3. Ausweisdokument nach Anspruch 2, **dadurch gekennzeichnet, dass** das Schutzelement (8) wenigstens ein Gegenstück (10) aufweist, mit dem die Abdeckung (9) durch das Verankerungselement (12) verbunden ist.

4. Ausweisdokument nach Anspruch 3, **dadurch gekennzeichnet, dass** das Verankerungselement (12) formschlüssig in das Gegenstück (10) eingreift.

5. Ausweisdokument nach einem der Ansprüche 3 oder 4, **dadurch gekennzeichnet, dass** das Verankerungselement (12) in eine Ausnehmung (14) oder einen Hinterschnitt (16) des Gegenstücks (10) eingreift.

6. Ausweisdokument nach einem der Ansprüche 3 bis 5, **dadurch gekennzeichnet, dass** die Abdeckung (9) und das Gegenstück (10) auf unterschiedlichen Seiten der Dokumentseite (2, 3, 4) angeordnet sind.

7. Ausweisdokument nach einem der Ansprüche 2 bis 6, **dadurch gekennzeichnet, dass** die Abdeckung (9) und/oder das Gegenstück (10) in einer Vertiefung der Dokumentseite (2, 3, 4) angeordnet sind.

8. Ausweisdokument nach einem der Ansprüche 2 bis 7, **dadurch gekennzeichnet, dass** die Abdeckung (9) und/oder das Gegenstück (10) eine Hauptfläche des integrierten Schaltkreises (6) abdecken.

9. Ausweisdokument nach einem der Ansprüche 2 bis 8, **dadurch gekennzeichnet, dass** das Verankerungselement (12) sich durch die Dokumentseite (2, 3, 4) hindurch erstreckt.

10. Ausweisdokument nach einem der Ansprüche 2 bis 9, **dadurch gekennzeichnet, dass** die Dokumentseite (2, 3, 4) im Bereich des Verankerungselements (12) ein Durchgangsloch (18) aufweist.

11. Ausweisdokument nach einem der Ansprüche 2 bis 10, **dadurch gekennzeichnet, dass** das Verankerungselement (12) ein Raster (13) aufweist.

12. Ausweisdokument nach einem der Ansprüche 3 bis 11, **dadurch gekennzeichnet, dass** das Gegenstück (10) als ein integraler Bestandteil der Dokumentseite (2, 3, 4) oder als ein separates Bauteil ausgebildet ist.

13. Ausweisdokument nach einem der vorhergehenden Ansprüche, **dadurch gekennzeichnet, dass** das Schutzelement (8) näher am Dokumentrücken (5) als am freien Ende der Dokumentseite (2, 3, 4), vorzugsweise unmittelbar benachbart zum Dokumentrücken (5), angeordnet ist.

14. Ausweisdokument nach einem der vorhergehenden Ansprüche, **dadurch gekennzeichnet, dass** der integrierte Schaltkreis (6) in einer Dokumentseite (2, 3) enthalten ist, die als eine Umschlagsseite ausgebildet ist.

15. Ausweisdokument nach einem der vorhergehenden Ansprüche, **dadurch gekennzeichnet, dass** das Schutzelement (8) aus Kunststoff und/oder Metall gefertigt ist.

16. Ausweisdokument nach einem der vorhergehenden Ansprüche, **dadurch gekennzeichnet, dass** es wenigstens teilweise aus Papier gefertigt ist.

17. Schutzelement für ein Ausweisdokument (1) mit einem integrierten Schaltkreis (6), **dadurch gekennzeichnet, dass** eine Abdeckung (9) mit wenigstens einem Verankerungselement (12) zur Fixierung am Ausweisdokument (1) vorgesehen ist.

18. Schutzelement nach Anspruch 17, **dadurch gekennzeichnet, dass** wenigstens ein Gegenstück (10) vorgesehen ist, das über das Verankerungselement (12) mit der Abdeckung (9) verbindbar ist.

19. Verfahren zum Herstellen eines Ausweisdokuments (1) mit mehreren Dokumentseiten (2, 3, 4), die im Bereich eines Dokumentrückens (5) miteinander verbunden sind, wobei eine der Dokumentseiten (2, 3, 4) einen integrierten Schaltkreis (6) aufweist, **dadurch gekennzeichnet, dass** die Dokumentseite (2, 3, 4), die den integrierten Schaltkreis (6) aufweist, im Bereich des integrierten Schaltkreises (6) durch ein mechanisch widerstandsfähiges Schutzelement (8) verstärkt wird, das wenigstens eine Hauptfläche des integrierten Schaltkreises (6) abdeckt und sich lediglich über einen Teilbereich der Dokumentseite (2, 3, 4) erstreckt.

20. Verfahren nach Anspruch 19, **dadurch gekennzeichnet, dass** durch die Montage des Schutzelements (8) eine elektrische Verbindung zwischen dem integrierten Schaltkreis (6) und einer Übertragungseinrichtung (7) hergestellt wird, durch die eine Kommunikation mit einem externen Gerät ermöglicht wird.

21. Verfahren nach einem der Ansprüche 19 oder 20, **dadurch gekennzeichnet, dass** das Schutzelement (8) durch Kleben, Nieten, Einrasten und/oder Prägen an der Dokumentseite (2, 3, 4) des Ausweisdokuments (1) fixiert wird.
